# EUROPÄISCHE PATENTSCHRIFT

(11) **EP 3 099 547 B1**
(45) Veröffentlichungstag und Bekanntmachung des Hinweises auf die Patenterteilung: **18.07.2018**
(21) Anmeldenummer: 15709403.8
(22) Anmeldetag: 07.01.2015
(51) Int. Cl.: B60R 25/24, G07C 9/00, B60R 25/20

(54) **MONTAGEMODUL**
ASSEMBLY MODULE
MODULE PRÊT AU MONTAGE

(30) Priorität: 31.01.2014 DE 102014101208
(43) Veröffentlichungstag der Anmeldung: 07.12.2016
(73) Patentinhaber: Huf Hülsbeck & Fürst GmbH & Co. KG, 42551 Velbert (DE)
(72) Erfinder: SCHINDLER, Mirko, 42549 Velbert (DE); STICHERLING, Nadine, 45257 Essen (DE); MÖNIG, Stefan, 58332 Schwelm (DE); SCHUMACHER, Helmut, 48653 Coesfeld (DE); ZIEGLER, Alexander, 42489 Wülfrath (DE); LINDIC, Iko, 45149 Essen (DE); HACHE, Christof, 42551 Velbert (DE); MÜLLER, Oliver, 42551 Velbert (DE); HELLER, Norbert, 47929 Grefrath (DE); YOMKIL MALABO, Jean, 45139 Essen (DE); ETTE, Bernd, 38442 Wolfsburg (DE)
(86) Internationale Anmeldenummer: PCT/DE2015/100003
(87) Internationale Veröffentlichungsnummer: WO 2015/113549

(56) Entgegenhaltungen:
- WO-A1-2013/037806
- DE-A1-102007 050 094
- DE-A1-102008 021 989
- DE-A1-102009 023 594
- DE-A1-102010 056 171
- DE-A1-102011 115 760
- DE-B3-102005 032 402

## Beschreibung

Die Erfindung betrifft ein Montagemodul für ein Kraftfahrzeug gemäß dem Oberbegriff des Patentanspruches 1. Des Weiteren betrifft die Erfindung ein Authentifizierungssystem gemäß dem Patentanspruch 20, ein Kraftfahrzeug gemäß dem Patentanspruch 21 oder 22 und ein Verfahren zur Bereitstellung eines Arbeitssignals für ein Kraftfahrzeug gemäß dem unabhängigen Patentanspruch 24. Die DE 10 2008 021989 A1 offenbart eine Lichtquelle, durch die ein für den Benutzer sichtbares Bedienfeld ausgebildet ist. Der Benutzer kann das Bedienfeld mit einem Fuß berühren und damit nach einer Entriegelung der Fahrzeugtür ein automatisches Öffnen der Fahrzeugtür einleiten.

Nachteilig hieran ist, dass das Berühren des Bedienfeldes auf vielfältige Weise misslingen kann. So kann das Bedienfeld zu spät berührt werden, z. B. weil der Benutzer das Bedienfeld nicht oder nur ungenügend wahrnehmen und/oder erreichen kann. Somit kann in einem solchen Fall die Fahrzeugtür nicht automatisch geöffnet werden. Die WO 2013/037806 A1 offenbart ein Montagemodul gemäß dem Oberbegriff des Anspruchs 1. Des Weiteren stellt WO 2015/022240 A1 Stand der Technik nach Artikel 54(3) EPÜ dar und offenbart ein Montagemodul für ein Kraftfahrzeug, mit einem optischen Sensorsystem, das ausgebildet ist, einen außerhalb des Kraftfahrzeuges liegenden Betätigungsbereich während einer Betätigungsdauer zu überwachen, um einen Benutzerwillen im Betätigungsbereich zu erkennen, wobei das optische Sensorsystem einen optischen Sensor aufweist, um Licht aus dem Betätigungsbereich zu empfangen, und das optische Sensorsystem ein Lichtmodul mit mindestens einer Lichtquelle zum Emittieren von Licht aufweist, wobei insbesondere die Lichtquelle dazu ausgebildet ist, Licht im nicht sichtbaren Bereich zu emittieren. Es ist daher die Aufgabe der vorliegenden Erfindung, ein Montagemodul und ein Verfahren für ein Kraftfahrzeug und ein Kraftfahrzeug bereitzustellen, das zumindest einen der vorgenannten Nachteile überwindet, insbesondere bei einem vorhandenen Benutzerwillen zuverlässiger das Arbeitssignal bereitstellt.

Zur Lösung der Aufgabe wird ein Montagemodul mit sämtlichen Merkmalen des Anspruches 1 vorgeschlagen. Vorteilhafte Weiterbildungen des Montagemoduls sind in den abhängigen Vorrichtungsansprüchen angegeben. Die Aufgabe wird weiterhin gelöst durch ein Kraftfahrzeug gemäß dem Anspruch 21 und durch ein Verfahren gemäß dem unabhängigen Anspruch 24. Eine vorteilhafte Weiterbildung des Verfahrens ist in dem abhängigen Verfahrensanspruch angegeben. Ferner wird ein Authentifizierungssystem mit einem erfindungsgemäßen Montagemodul, einem ID-Geber und einem Zugangskontrollsystem im Anspruch 20 unter Schutz gestellt. Ebenfalls wird ein Kraftfahrzeug mit einem erfindungsgemäßem Authentifizierungssystem gemäß dem Anspruch 20 unter Schutz gestellt. Weitere Merkmale und Details, die im Zusammenhang mit dem erfindungsgemäßen Montagemodul und/oder Authentifizierungssystem und/oder Kraftfahrzeug beschrieben sind, gelten dabei auch im Zusammenhang mit dem erfindungsgemäßen Verfahren und umgekehrt. Dabei können die in den Ansprüchen und in der Beschreibung erwähnten Merkmale jeweils einzeln für sich oder in Kombination erfindungswesentlich sein. Es ist ein Hilfsmittel vorgesehen, das dem Benutzer hilft, den Benutzerwillen im Betätigungsbereich kund zu tun, sodass das Arbeitssignal bereitgestellt wird.

Vorzugsweise weist das Montagemodul ein Anzeigeelement auf, durch das sichtbares Licht emittierbar ist, um zumindest einen Teil des Betätigungsbereiches und/oder die Betätigungsdauer für den Benutzer sichtbar zu machen. Das sichtbare Licht des Anzeigeelementes kann veränderlich emittierbar sein. So kann die Lichtemission des Anzeigeelementes z. B. an einen veränderten Betätigungsbereich und/oder eine veränderte maximale Betätigungsdauer angepasst werden.

Beispielsweise kann das Anzeigeelement in mehrere Beleuchtungszustände bringbar sein. Beispielsweise kann ein Beleuchtungszustand als Hinweissignal auf das Ende der Betätigungsdauer dienen.

Ebenfalls ist es denkbar, dass die Position und/oder die Größe des Betätigungsbereiches und/oder die maximale Betätigungsdauer veränderbar ist. Diese Veränderung ist insbesondere hilfreich, wenn ein körperlich beeinträchtigter Benutzer seinen Benutzerwillen kundtun möchte. So kann ein körperlich beeinträchtigter Benutzer beispielsweise den Betätigungsbereich während der ursprünglich vorgesehenen maximalen Betätigungsdauer nicht schnell genug erreichen. Auch ist es denkbar, dass der körperlich beeinträchtigte Benutzer die ursprüngliche Position des Betätigungsbereiches räumlich nicht erreicht. Eine veränderbare Position und/oder Größe des Betätigungsbereiches kann aber auch für einen körperlich unbeeinträchtigten Benutzer hilfreich sein. So kann beispielsweise der Betätigungsbereich an einer ungünstigen Position angeordnet sein. Die ungünstige Position kann hierbei dauerhaft sein, z. B. kann der Betätigungsbereich auf einer Anhängerkupplung enden. Alternativ kann die ungünstige Position nur einmalig für ein Bereitstellen des Arbeitssignals ungünstig sein, z. B. weil der Betätigungsbereich in einer Pfütze endet. Indem die Position des Betätigungsbereiches, die Größe des Betätigungsbereiches und/oder die Länge der maximalen Betätigungsdauer veränderbar ist, wird es dem Benutzer erleichtert, seinen Benutzerwillen zum Bereitstellen eines Arbeitssignals im Betätigungsbereich kund zu tun.

Insbesondere kann die Position und/oder die Größe des Betätigungsbereiches und/oder die Länge der maximalen Betätigungsdauer durch eine vordefinierte Benutzerhandlung veränderbar sein.

Vorteilhafterweise ist das Montagemodul geeignet, den Betätigungsbereich erneut zu überwachen, um einen Benutzerwillen zum Bereitstellen eines Arbeitssignals zu erkennen, wenn eine vorangegangene maximale Betätigungsdauer ohne ein Erkennen eines Benutzerwillens verstrichen ist. Dieses ist insbesondere hilfreich, wenn der Benutzer abgelenkt war und den Betätigungsbereich nicht rechtzeitig erreicht hat oder es ihm nicht gelungen ist, den Benutzerwillen im Betätigungsbereich kund zu tun, weil er eine Vorgabe nicht erfüllt hat, z. B. nicht die vorgegebene Bewegung gemacht hat. Alternativ kann eine vordefinierte Benutzerhandlung notwendig sein, um den Betätigungsbereich erneut für eine weitere Betätigungsdauer zu überwachen. Das erneute Überwachen kann durch die vordefinierte Benutzerhandlung einleitbar sein. Das Montagemodul leitet insbesondere das erneute Überwachen ein, nachdem das Montagemodul ein Signal über die vordefinierte Benutzerhandlung erhalten hat oder nachdem das Montagemodul die vordefinierte Benutzerhandlung erkannt hat.

Es sind verschiedene vordefinierte Benutzerhandlungen denkbar. Die vordefinierte Benutzerhandlung kann einer Eingabe in ein Benutzermenü entsprechen. So kann die vordefinierte Benutzerhandlung derart ausgestaltet sein, dass der Benutzer die Position des Betätigungsbereiches, die Größe des Betätigungsbereiches und/oder die maximale Länge der maximalen Betätigungsdauer durch eine Eingabe in ein Benutzermenü ändert. Das Benutzermenü kann das Benutzermenü des Montagemoduls, eines KFZ-Steuergerätes oder eines ID-Gebers sein. In den letzteren beiden Fällen wird die Eingabe dem Montagemodul übermittelt. Eine vordefinierte Benutzerhandlung als Eingabe in ein Benutzermenü ist insbesondere denkbar, wenn dauerhaft die Position und/oder die Größe des Betätigungsbereiches und/oder die maximale Länge der Betätigungsdauer geändert werden soll, z. B. für einen körperlich beeinträchtigten Benutzer, oder, weil der Betätigungsbereich einer dauerhaft ungünstige Position einnimmt. Alternativ kann die vordefinierte Benutzerhandlung eine von dem optischen Sensorsystem erkennbare vordefinierte Benutzerhandlung sein. Hierbei kann es sich bei der vordefinierten Benutzerhandlung beispielsweise um eine vorgegebene Gestik handeln, die innerhalb eines Wahrnehmungsbereiches des optischen Sensorsystems ausgeführt werden muss. Hierbei kann es sich beispielsweise um ein Hin- und Herbewegen eines Körperteils eines Benutzers handeln. Ebenfalls kann das Verharren eines Körperteils im Wahrnehmungsbereich, insbesondere im Betätigungsbereich, für die vorgegebene Gestik notwendig sein. Bei dem Körperteil kann es sich insbesondere um die Hand oder den Fuß des Benutzers handeln. Alternativ und/oder zusätzlich kann die vordefinierte Benutzerhandlung, die durch das optische Sensorsystem erkennbar ist, eine Bewegung des Benutzers in den Wahrnehmungsbereich des optischen Sensorsystems und/oder aus dem Wahrnehmungsbereich des optischen Sensorsystems sein. Insbesondere kann vorgesehen sein, dass der Benutzer den Wahrnehmungsbereich für eine vorgegebene Zeitspanne verlässt und sich dann wieder in den Wahrnehmungsbereich begibt.

In einer Alternative kann das Montagemodul in einen Lernmodus überführbar sein. In dem Lernmodus kann z. B. das Montagemodul die zu ändernde Länge der maximalen Betätigungsdauer lernen. Im Montagemodul kann der körperlich beeinträchtigte Benutzer, z. B. der Rollstuhlfahrer, der Rollatorfahrer oder der am Gehstock Gehende, seinen Bewegungsablauf vorgeben und das Montagemodul lernt, wie lange der körperlich beeinträchtigte Benutzer für das Kundtun seines Betätigungswillens benötigt. Entsprechend kann das Montagemodul im Lernmodus einen geänderten Bewegungsablauf lernen. So kann z. B. der Rollstuhlfahrer eine andere Mindestabstandsbedingung im Lernmodus dem Montagemodul lehren und/oder eine andere vorgegebene Bewegung dem Montagemodul im Lernmodus beibringen. Beispielsweise kann die Mindestabstandsbedingung herabgesetzt werden. Ebenfalls ist es denkbar, dass in dem Lernmodus das Montagemodul die zu ändernde Position und/oder die Größe des Betätigungsbereiches lernt.

Es kann vorgesehenen sein, dass die veränderbaren Positionen des Betätigungsbereiches individuell einstellbar sind. Insbesondere können die Positionen, die der Betätigungsbereich einnehmen kann, im Lernmodus lernbar sein. Alternativ kann vorgesehen sein, dass verschiedene Positionen, die der Betätigungsbereich einnehmen kann, in dem optischen Sensorsystem fest vorgegeben sind.

So können verschiedene Positionen des Betätigungsbereiches fest vorgegeben sein. Stellt das Montagemodul fest, dass eine Position des Betätigungsbereiches unerwünscht ist, so wechselt es zu einer weiteren fest vorgegebenen Position des Betätigungsbereiches. Insbesondere ist die Reihenfolge, in welcher der Betätigungsbereich die Position wechselt, fest vorgegeben. Das heißt, ist eine erste Position des Betätigungsbereiches nicht möglich, so wechselt der Betätigungsbereich zur zweiten Position etc.

Damit die verschiedenen Positionen des Betätigungsbereiches für den Benutzer sichtbar gemacht werden können, kann das Anzeigeelement mehrere Leuchtmittel aufweisen. Jeweils ein- oder mehrere Leuchtmittel sind hierbei den verschiedenen Positionen des Betätigungsbereiches fest zugeordnet. Das heißt, wird eine erste Position des Betätigungsbereiches überwacht, so wird die erste Position von dem dazu gehörigen Leuchtmittel beleuchtet. Wechselt der Betätigungsbereich in die zweite Position und wird in der zweiten Position überwacht, so wird diese Position durch ein anderes entsprechende Leuchtmittel des Anzeigeelementes beleuchtet. Die übrigen Leuchtmittel sind ausgeschaltet. Ein Wechsel der Position des Betätigungsbereichs und der damit einhergehende Wechsel des anzuschaltenden Leuchtmittels sind möglich, falls ein Leuchtmittel defekt ist. In diesem Fall wird eine Position des Betätigungsbereichs mit einem intakten dazugehörigen Leuchtmittel ausgewählt.

Das Montagemodul kann geeignet sein, die Position des Benutzers und die Richtung, in die der Benutzer sich zum Betätigungsbereich zu bewegen hat, zu ermitteln. Hierbei ist insbesondere die Position des Benutzers im Wahrnehmungsbereich ermittelbar. Das Montagemodul, insbesondere die Überwachungseinheit, ist geeignet, ein für den Benutzer wahrnehmbares Signal auszulösen, um den Benutzer zum Betätigungsbereich zu führen. Bei dem wahrnehmbaren Signal kann es sich um ein sichtbares, hörbares oder fühlbares Signal handeln.

Das Montagemodul selbst kann das Mittel aufweisen, durch das das wahrnehmbare Signal für den Benutzer erzeugbar ist, um den Benutzer zum Betätigungsbereich zu führen. Alternativ weist das Kraftfahrzeug das Mittel auf, durch die das wahrnehmbare, insbesondere sichtbare, hörbare oder fühlbare Signal für den Benutzer erzeugbar ist, um den Benutzer zum Betätigungsbereich zu führen. Z. B. kann das Montagemodul zusätzliche Leuchtelemente und/oder einen Lautsprecher aufweisen.

Die Überwachungseinheit des optischen Sensorsystems steuert und/oder regelt das Verfahren, durch den der Benutzetwille in dem Betätigungsbereich innerhalb der Betätigungsdauer erkannt wird. So kann die Überwachungseinheit zum Auswerten des optischen Sensors dienen. Die Überwachungseinheit kann dazu ausgebildet sein, Bilder auszuwerten, die vom optischen Sensor aufgenommen worden sind.

Der Betätigungsbereich wird insbesondere überwacht, nachdem ein berechtigter Benutzer authentifiziert worden ist. Das optische Sensorsystem kann daher dazu ausgebildet sein, vor Schritt a) ein Signal, dass der berechtigte Benutzer authentifiziert ist, zu erhalten, und daraufhin die Überwachung des Betätigungsbereichs zu veranlassen. Bei der Authentifizierung wird die Zugangsberechtigung eines Benutzers überprüft.

Zusätzlich kann das optische Sensorsystem geeignet sein, vor der Authentifizierung den außerhalb des Kraftfahrzeugs liegenden Detektionsbereich zu überwachen und im Falle eines Erkennens des Benutzers im Detektionsbereich ein Signal für den Start einer Authentifizierungsüberprüfung zwischen einem ID-Geber und einem Zugangskontrollsystem des Kraftfahrzeuges auszulösen. Das heißt, der Detektionsbereich dient dazu, die Nähe eines Benutzers festzustellen. Wird die Nähe eines Benutzers im Detektionsbereich festgestellt, so kann insbesondere eine Passive-Keyless-Entry-Überprüfung eingeleitet werden.

Der optische Sensor und/oder das Lichtmodul können dazu ausgebildet sein, sowohl zur Überwachung des Detektionsbereiches als auch zum Überwachen des Betätigungsbereiches eingesetzt zu werden. D. h., derselbe optische Sensor und/oder dasselbe Lichtmodul dienen zur Überwachung des Detektions- und des Betätigungsbereiches.

Das Montagemodul kann so ausgebildet sein, dass der Betätigungsbereich innerhalb des Detektionsbereiches liegt. Insbesondere liegt jede Position, die für den Betätigungsbereich einnehmbar ist, innerhalb des Detektionsbereiches.

Die Erfindung umfasst auch ein Authentifizierungssystem mit einem ID-Geber, einem Zugangskontrollsystem und einem erfindungsgemäßen Montagemodul.

Die Aufgabe der Erfindung wird auch gelöst durch Kraftfahrzeug mit einem erfindungsgemäßen Montagemodul. Die Aufgabe der Erfindung wird auch gelöst durch ein Verfahren zur Bereitstellung eines Arbeitssignals. Weitere, die Erfindung verbessernde Maßnahmen ergeben sich aus der nachfolgenden Beschreibung zu den Ausführungsbeispielen der Erfindung, welche in den Figuren schematisch dargestellt sind. Sämtliche aus den Ansprüchen, der Beschreibung oder Zeichnung der vorgegebenen Merkmale oder Vorteile einschließlich konstruktiver Einzelheiten, räumlicher Anordnung und Verfahrensschritte können sowohl für sich als auch in den verschiedensten Kombinationen erfindungswesentlich sein. Es zeigen:
- Fig. 1: eine Draufsicht auf einen Heckbereich eines erfindungsgemäßen Kraftfahrzeuges mit einem erfindungsgemäßen Montagemodul und einem erfindungsgemäßen Authentifizierungssystem,
- Fig. 2: ein Seitenbereich eines weiteren erfindungsgemäßen Kraftfahrzeuges mit einem weiteren erfindungsgemäßen Montagemodul und einem weiteren erfindungsgemäßen Authentifizierungssystem in einer Seitenansicht,
- Fig. 3: eine Seitenansicht eines Heckbereichs eines weiteren erfindungsgemäßen Kraftfahrzeuges mit einem weiteren erfindungsgemäßen Montagemodul und einem weiteren erfindungsgemäßen Authentifizierungssystem
- Fig. 4: eine Seitenansicht eines Heckbereichs gemäß Figur 3,
- Fig. 5: eine Draufsicht auf ein erfindungsgemäßes Montagemodul,
- Fig. 6: eine Ansicht auf einen Bildsensor aus Figur 5, wobei dargestellt ist, wie eine Überwachungseinheit eines erfindungsgemäßen Montagemoduls den Bildsensor auswerten kann,
- Fig. 7: eine Darstellung der Strahlungsintensität über der Zeit, die von einem erfindungsgemäßen Montagemodul emittiert wird,
- Fig. 8: ein erfindungsgemäßes Verfahren und
- Fig. 9: ein weiteres erfindungsgemäßes Verfahren.

Elemente mit gleicher Funktion und Wirkungsweise sind in den Figuren mit denselben Bezugszeichen bezeichnet.

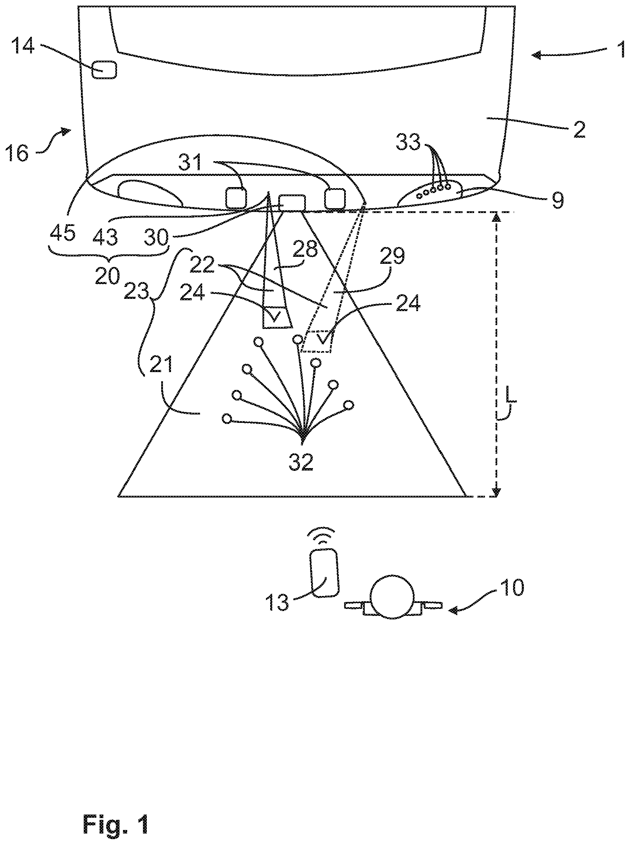

In den Figuren 1 bis 4 ist jeweils dargestellt, wie ein erfindungsgemäßes Montagemodul 20 und ein erfindungsgemäßes Authentifizierungssystem 16 bei einem erfindungsgemäßen Kraftfahrzeug 1 eingesetzt werden. In den Figuren 1, 3 und 4 ist hierbei der Einsatz in einem Heckbereich eines Kraftfahrzeuges 1 mit einer Heckklappe 2 dargestellt. Das optische Sensorsystem 30 des Montagemoduls 20 ist im Bereich der Heckklappe 2, z. B. in einer Griffleiste der Heckklappe 2, angeordnet.

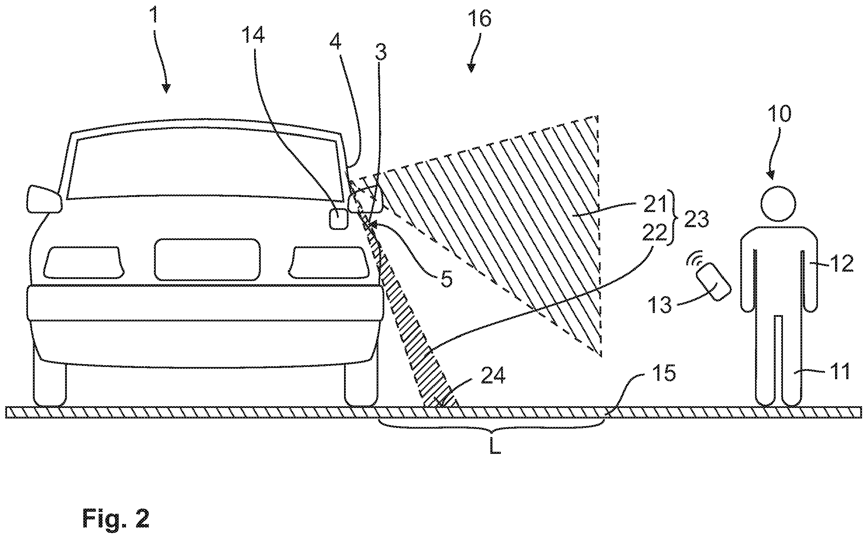

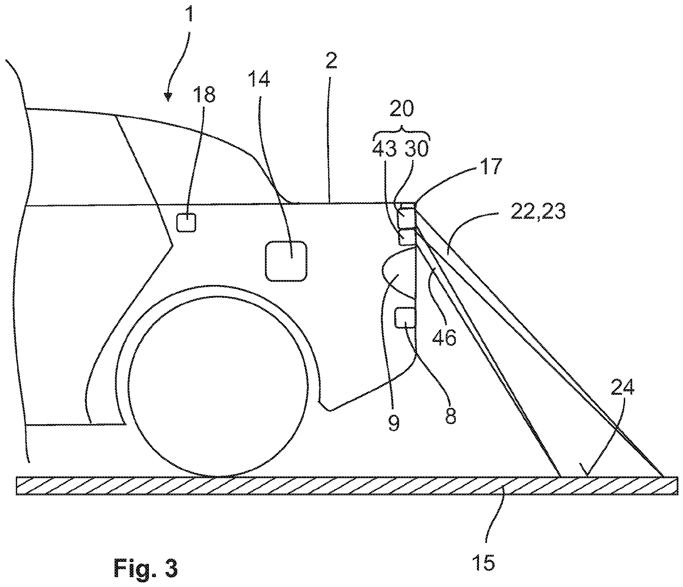

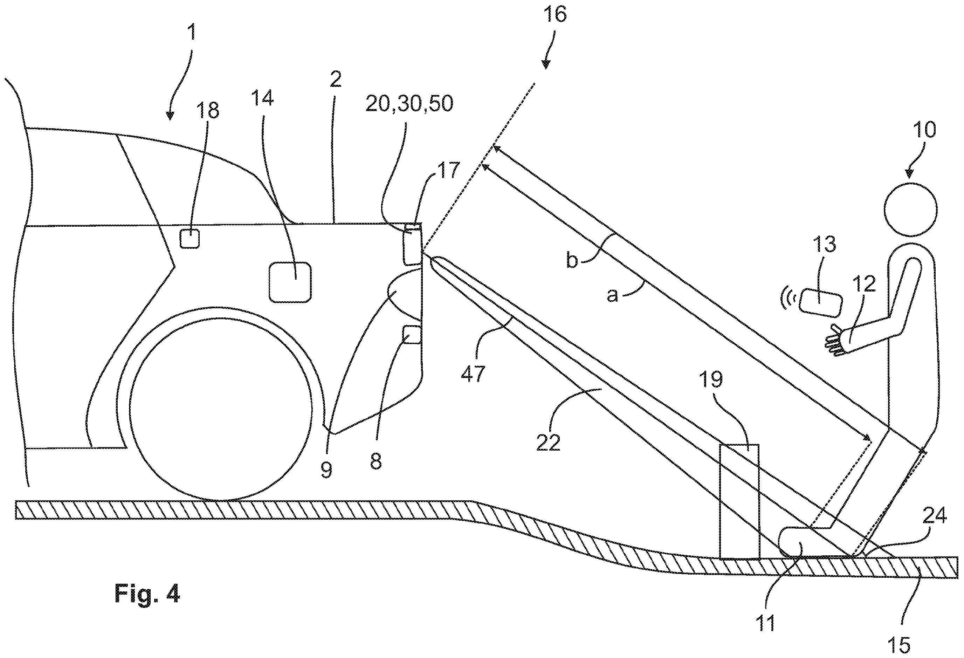

In Figur 1 wird durch das optische Sensorsystem 30 ein außerhalb des Kraftfahrzeuges 1 liegender Betätigungsbereich 22 in einer ersten Position 28 erzeugt. Der Betätigungsbereich 22 ist zu einer in den Figuren 2 bis 4 dargestellten Bodenfläche 15 gerichtet und weist auf der Bodenfläche 15 eine Endfläche 24 auf. Nach einer erfolgreichen Authentifizierung überwacht das optische Sensorsystem 30 den Betätigungsbereich 22 in der ersten Position 28. Tut der Benutzer 10 seinen Benutzerwillen kund, indem der Benutzer 10 eine vorgegebene Bewegung in dem Betätigungsbereich 22 in der ersten Position 28 ausführt und beispielsweise mit einem Fuß 11 für eine gewisse Zeit und innerhalb einer vordefinierten maximalen Betätigungsdauer in den Betätigungsbereich 22 in der ersten Position 28 tritt, so erkennt das optische Sensorsystem 30 den Benutzerwillen und stellt ein Arbeitssignal bereit. Bei dem Arbeitssignal handelt es sich um ein Signal der Öffnung der Heckklappe 2. Hierbei kann es nur sein, dass ein in den Figuren 3 und 4 dargestelltes Türschloss 8 der Heckklappe 2 entriegelt wird und durch den Druck einer Dichtung leicht aufspringt. Andererseits ist es denkbar, dass zugleich eine motorische Öffnungshilfe durch das Arbeitssignal aktiviert wird, so dass die Heckklappe 2 sich vollständig öffnet.

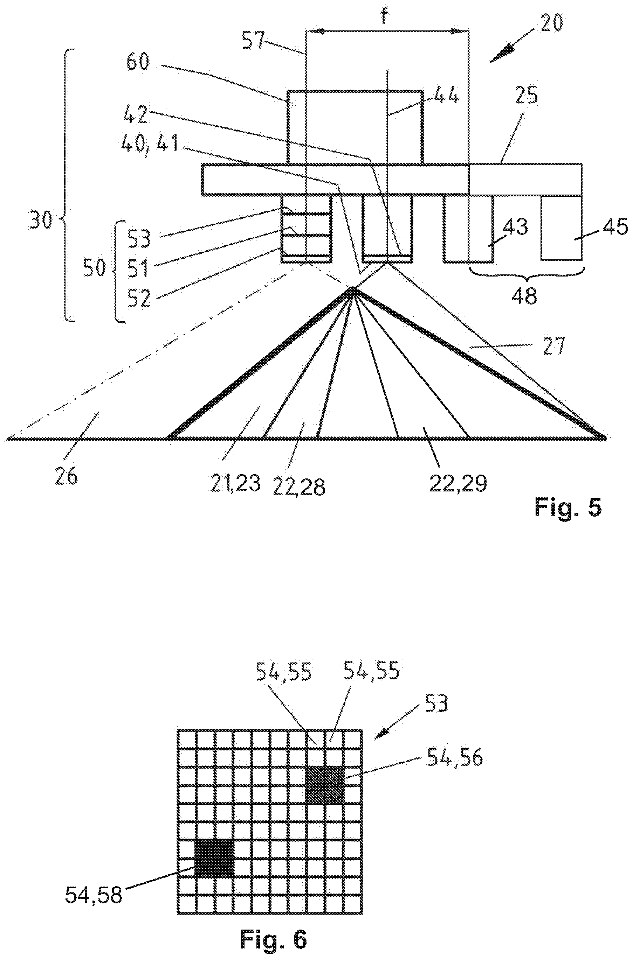

In der Figur 1 sind verschiedene Hilfsmittel 31, 45 des Montagemoduls 20 dargestellt, die dem Benutzer 10 helfen, den Benutzerwillen im Betätigungsbereich 22 zu erkennen. So ist der Betätigungsbereich 22, den das Montagemodul 20 ausbildet, in seiner Position 28,29 veränderbar. Ist z. B. die erste Position 28 für einen Benutzer schlecht zugänglich, so kann die Position des Betätigungsbereichs 22 auf eine zweite Position 29 gelegt werden. Die Positionen 28, 29 sind hierbei fest in einer in der Figur 5 dargestellten Überwachungseinheit 60 des optischen Sensorsystems 30 hinterlegt. Die Positionen 28, 29 werden durch ein Anzeigeelement 48 für den Benutzer 10 sichtbar gemacht. Hierzu weist das Anzeigeelement 48 mehrere Leuchtmittel 43, 45 auf. Das erste Leuchtmittel 43 macht die erste Position 28 des Betätigungsbereichs 22 sichtbar, indem das erste Leuchtmittel 43 sichtbares Licht 46 emittiert (nicht dargestellt). Das zweite Leuchtmittel 45 macht entsprechend die zweite Position 29 des Betätigungsbereichs 22 sichtbar, indem das zweite Leuchtmittel 45 sichtbares Licht 46 emittiert (nicht dargestellt). Hierbei macht das Leuchtmittel 43, 45 jeweils die Endfläche 24 des Betätigungsbereichs 22 auf der Bodenfläche 15 sichtbar.

Wird der Betätigungsbereich 22 in der ersten Position 28 überwacht, so emittiert nur das erste Leuchtmittel 43 sichtbares Licht 46. Wird der Betätigungsbereich in der zweiten Position 28 überwacht, so emittiert nur das zweite Leuchtmittel 45 sichtbares Licht 46. Der Benutzer 10 kann durch eine vordefinierte Benutzerhandlung die Position 22, 28 des Betätigungsbereichs 22 verändern. Hierzu kann der Benutzer 10 beispielsweise eine Eingabe in einem Benutzermenü vornehmen oder eine vordefinierte Benutzerhandlung, z. B. eine bestimmte Gestik, in einem Wahrnehmungsbereich 23 des optischen Sensorsystems 30 durchführen. Ebenfalls ist durch eine vordefinierte Benutzerhandlung die maximale Betätigungsdauer einstellbar.

Weiterhin kann der Benutzer 10 durch eine vordefinierte Benutzerhandlung erreichen, dass der Betätigungsbereich 22 in der ersten Position 28 oder in der zweiten Position 29 erneut überwacht wird, wenn z. B. der Benutzer 10 den Betätigungsbereich 22 erst nach der Betätigungsdauer erreicht hat.

Als weiteres Hilfsmittel weist das Montagemodul Leuchtelemente 31 auf. Die Leuchtelemente 31, z. B. LEDs, sind derart zur Bodenfläche 15 gerichtet, dass eine aus mehreren Lichtpunkten auf der Bodenfläche 15 zusammengesetzte Markierung 32 erzeugbar ist, wenn die Leuchtelemente 31 angeschaltet sind. Die Leuchtelemente 31 sind während der Betätigungsdauer angeschaltet. Die Markierung 32 ist so ausgestaltet, dass der Benutzer 10 zu dem Betätigungsbereich 22 in der ersten Position 28 geführt wird.

Als weiteres Hilfsmittel kann in der in Figur 5 dargestellten Überwachungseinheit 60 des optischen Sensorsystems 30 ein Verfahren hinterlegt sein, das ebenfalls den Benutzer 10 zu dem Betätigungsbereich 22 in der ersten oder zweiten Position 28, 29 führt. Hierzu ermittelt das optische Sensorsystem 30 die Position des Benutzers 10 im Wahrnehmungsbereich 23, insbesondere durch eine Time-of-Flight Messung, und kann so die Richtung zum Betätigungsbereich 22 in der ersten oder zweiten Position 28, 29, die gerade überwacht wird, bestimmen. Das optische Sensorsystem 30, insbesondere die Überwachungseinheit 60, veranlasst Lichter 33 einer Rückleuchte 9 des Kraftfahrzeuges 1, entsprechend zu leuchten. Muss sich der Benutzer 10 z. B. nach links bewegen, so können die nebeneinander angeordneten Lichter 33 ebenfalls von rechts nach links blinken. Alternativ kann die gesamte linke Rückleute 9 blinken, wenn sich der Benutzer 10 nach links orientieren muss. Entsprechend kann die gesamte rechte Rückleuchte 9 blinken, wenn sich der Benutzer 10 nach rechts orientieren muss.

Als weiteres Hilfsmittel kann in der Überwachungseinheit 60 ein Verfahren hinterlegt sein, mit dem in einem vorgegebenen Zeitintervall vor dem Ende der Betätigungsdauer, das Leuchtmittel 43, 45, das Licht 46 emittiert, anfängt zu blinken. Hierdurch wird der Benutzer 10 gewarnt, dass die Betätigungsdauer in Kürze beendet wird.

In Figur 1 entspricht der Wahrnehmungsbereich 23 einem Detektionsbereich 21. Das optische Sensorsystem 30 überwacht bei einem abgestellten Kraftfahrzeug 1 den Detektionsbereich 21 dauerhaft. Nähert sich ein Benutzer 10, der in der Figur 1 noch außerhalb des Detektionsbereiches 21 dargestellt ist, mit einem ID-Geber 13 dem Kraftfahrzeug 1 und dem optischen Sensorsystem 30, so gelangt der Benutzer 10 in den Detektionsbereich 21. Wird der Benutzer 10 in dem Detektionsbereich 21 erkannt, so wird ein Signal zum Starten einer Authentifizierungsüberprüfung ausgelöst.

Dadurch, dass das optische Sensorsystem 30 erkennt, dass sich ein Benutzer 10 dem Kraftfahrzeug 1 nähert, und im Falle eines Erkennens des Benutzers 10 im Detektionsbereich 21 ein Signal für den Start einer Authentifizierungsüberprüfung ausgelöst wird, muss der Benutzer nicht aktiv werden, um die Authentifizierungsüberprüfung einzuleiten. Somit muss der Benutzer 10 den ID-Geber 13 nicht in einer Hand 12 halten, sondern es genügt, den ID-Geber 13 beispielsweise in einer Tasche bei sich zu führen. Somit handelt es sich um eine Passive-Keyless-Entry-Überprüfung. Der Detektionsbereich 21 ist in Figur 1 schräg auf die Bodenfläche 15 gerichtet.

Durch das Signal wird ein Zugangskontrollsystem 14 des Authentifizierungssystems 16 veranlasst, ein Wecksignal an den ID-Geber 13 zu senden. Anschließend übermittelt der ID-Geber 13 einen Authentifizierungscode an das Zugangskontrollsystem 14. Das Zugangskontrollsystem 14 vergleicht den Authentifizierungscode mit einem gespeicherten Code. Stimmen die beiden Codes überein, so ist die Authentifizierung erfolgreich und ein Entriegelungssignal wird ausgelöst. Hierbei kann es sich um ein Entriegelungssignal für alle Türen des Kraftfahrzeuges 1 handeln oder aber auch nur ein Entriegelungssignal für die Heckklappe 2. Ebenfalls wird ein Signal an die Überwachungseinheit 60 übermittelt, mit der Überwachung des Betätigungsbereichs 22 zu beginnen.

Der Detektionsbereich 21 hat die Länge L. In Figur 1 ist der Betätigungsbereich von geringeren räumlichen Ausmaßen als der Detektionsbereich 21 und liegt mit beiden Positionen 28, 29 innerhalb des Detektionsbereichs 21. Der Betätigungsbereich 22 endet mit beiden Positionen 28, 29 näher am Kraftfahrzeug 1 als der Detektionsbereich 21. Somit kann der Benutzer 10 seine Bewegungsrichtung beibehalten, wobei der Benutzer 10 zunächst authentifiziert wird. Dann kann der Benutzer 10 den Fuß 11 in den Betätigungsbereich 22 bewegen.

In der Figur 2 ist ein weiteres Ausführungsbeispiel dargestellt, wie das erfindungsgemäße Montagemodul 20 eingesetzt wird. Soweit im Folgenden nicht erläutert, entsprechen Wirkungsweise und Funktion des in Figur 2 dargestellten Montagemoduls 20 der Wirkungsweise und Funktion des in der Figur 1 dargestellten Montagemoduls 20. Das Montagemodul 20 ist in der Figur 2 in einer B-Säule 4 einer Fahrzeugseite angeordnet. Durch den Detektionsbereich 21 wird eine Annäherung an eine Seitentür 3 des Kraftfahrzeuges 1 überwacht. Das Arbeitssignal kann zum Öffnen der Seitentür 3 dienen. Die vorgegebene Bewegung zum Bereitstellen des Arbeitssignals kann eine vorgegebene Bewegung mit einer Hand 12 des Benutzers 10 im Bereich eines Türgriffs 5 sein.

Im Gegensatz zu dem Ausführungsbeispiel der Figur 1, befindet sich in dem in der Figur 2 dargestellten Ausführungsbeispiel der außerhalb des Kraftfahrzeuges 1 liegende Detektionsbereich 21 vollständig über der Bodenfläche 15. Der Betätigungsbereich 22 des Ausführungsbeispiels der Figur 2 umfasst den Bereich des Türgriffes 5. Der Betätigungsbereich 22, der nur eine Position einnehmen kann, liegt außerhalb des Detektionsbereiches 21. Der Wahrnehmungsbereich umfasst den Detektionsbereich 21 und den Betätigungsbereich 22. Das nicht dargestellte Anzeigeelement 48 beleuchtet den Türgriff 5.

In den Figuren 3 und 4 ist ein weiteres Ausführungsbeispiel eines erfindungsgemäßen Montagemoduls 20 dargestellt. Soweit im Folgenden nicht erläutert, entsprechen Wirkungsweise und Funktion des in den Figur 3 und 4 dargestellten Montagemoduls 20 der Wirkungsweise und Funktion des in der Figur 1 dargestellten Montagemoduls 20. Das Montagemodul 20 überwacht keinen Detektionsbereich 21. Somit entspricht der Wahrnehmungsbereich 23 dem Betätigungsbereich 22. Der Betätigungsbereich 22 weist nur eine mögliche Position auf. Das einzige Leuchtmittel 43 des Anzeigeelements 48, das nur in Figur 3 dargestellt ist, ist nahe am optischen Sensorsystem 30 angeordnet. Hierdurch ist es möglich, dass das vom Leuchtmittel 43 emittierte Licht 46 möglichst deckungsgleich mit dem Betätigungsbereich 22 ist. Insbesondere ist die Endfläche 24 des Betätigungsbereichs 22 identisch zu dem Abschnitt der Bodenfläche 15, die vom Licht 46 beleuchtet wird. Wie in Figur 4 dargestellt, weist der Betätigungsbereich 22 einen kegelstumpfförmigen Bereich mit einer runden oder elliptischen Grundfläche auf. Der kegelstumpfförmige Bereich entspricht einem schrägen Kegelstumpf.

In dem Ausführungsbeispiel der Figuren 3 und 4 sind weitere Hilfsmittel vorgesehen. So weist das Kraftfahrzeug 1 einen kapazitiven Sensor 17 auf. Verstreicht die maximale Betätigungsdauer, ohne dass der Benutzer 10 seinen Benutzerwillen hinreichend kund getan hat, so wird der Betätigungsbereich 22 nicht mehr überwacht. Soll der Betätigungsbereich erneut überwacht werden, so kann der Benutzer 10 z. B. seinen Arm in die Nähe des kapazitiven Sensors 17 bewegen. Der kapazitive Sensor 17 übermittelt hierauf ein Signal an die Überwachungseinheit 60, die den Betätigungsbereich 22 erneut überwachen lässt. Hierbei emittiert auch das Leuchtelement 43 erneut sichtbares Licht 46.

Das Kraftfahrzeug 1 weist des Weiteren einen Helligkeitssensor 18 auf. Der Helligkeitssensor 18 ermittelt die Helligkeit des Umgebungslichts und übermittelt hierauf ein Signal an die Überwachungseinheit 60, die die Helligkeit des sichtbaren Lichts 46 anpasst. Dadurch, dass das emittierte Licht 46 genügend hell leuchtet, kann der Benutzer 10 den Betätigungsbereich 22 besser auffinden.

In Figur 4 ist dargestellt, dass nicht nur ein Fuß 11 im Betätigungsbereich 22 genügen kann, um den Benutzerwillen kundzutun. Vielmehr muss zudem eine Mindestabstandsbedingung eingehalten werden. Befindet sich ein Fuß 11 eines Benutzers 10 in dem Betätigungsbereich 22, so wird der Abstand a des Fußes 11 zu einem optischen Sensor 50 des optischen Sensorsystems 30 erfasst. Hierzu sendet ein Lichtmodul 40 des optischen Sensorsystems 30 gepulstes, infrarotes Licht aus. Das Licht des Lichtmoduls 40 wird am Fuß 11 reflektiert und von einem optischen Sensor 50 des optischen Sensorsystems 30 empfangen. In Figur 1 ist ein Lichtstrahl 47, der von einem Punkt des Fußes 11 oder der Endfläche 24 reflektiert und von einem Pixel 54 des optischen Sensors 50 empfangen wird, dargestellt. Der optische Sensor 50 wird von der Überwachungseinheit 60 des optischen Sensorsystems 30 ausgewertet. Um den Abstand a zu bestimmen, kann eine Time-of-Flight Messung durchgeführt werden. Der optische Sensor 50, das Lichtmodul 40 und die Überwachungseinheit 60 sind in Figur 5 dargestellt.

Die Überwachungseinheit 60 vergleicht den erfassten Abstand a mit einer Mindestabstandsbedingung. Die Überwachungseinheit 60 stellt ein Arbeitssignal zum Öffnen der Heckklappe 2 nur bereit, wenn die Mindestabstandsbedingung erfüllt ist. In einer Alternative kann zunächst der Abstand b der Endfläche 24 zum optischen Sensor 50 erfasst werden, solange sich noch kein Fuß 11 in dem Betätigungsbereich 22 befindet. Ein Verhältnis des Abstands a zum Abstand b oder eine Differenz des Abstands a zum Abstand b wird gebildet und der erhaltene Wert wird mit einem in der Überwachungseinheit hinterlegten Wert verglichen. Nur wenn der Wert den hinterlegten Wert bzgl. des Verhältnisses überschreitet oder bzgl. der Differenz unterschreitet, wird die Mindestabstandsbedingung erfüllt. Hierdurch ist eine Vorgabe für das Bereitstellen des Arbeitssignals geschaffen worden, so dass nicht jedes Objekt im Betätigungsbereich 22 das Arbeitssignal auslöst. Vielmehr muss ein Benutzerwille da sein, der den Fuß 11 so in den Betätigungsbereich 22 hält, dass die Mindestabstandsbedingung als Vorgabe erfüllt wird und das Arbeitssignal bereitgestellt wird.

In Figur 4 ist schematisch ein Rollstuhl 19 dargestellt. Fährt ein Rollstuhlfahrer in den Betätigungsbereich 22, so kann die Mindestabstandsbedingung zunächst nicht erfüllt werden. Als ein Hilfsmittel kann das optische Sensorsystem 30 in einen Lernmodus gebracht werden, in dem das optische Sensorsystem 30 eine veränderte Mindestabstandsbedingung lernt. Hierzu kann der Rollstuhl 19 eine typische Position in dem Betätigungsbereich 22 einnehmen, die das optische Sensorsystem 30 ermittelt und als Mindestabstandsbedingung übernimmt. Alternativ oder zusätzlich kann in dem Lernmodus die maximale Betätigungsdauer an die Geschwindigkeit eines körperlich beeinträchtigten Benutzers 10 angepasst werden. Hierbei misst das optische Sensorsystem 30 die Zeit, die der Benutzer 10 von der erfolgreichen Authentifizierung bis zur Erreichen des Betätigungsbereichs 22 benötigt und ermittelt daraus eine angepasste maximale Betätigungsdauer.

In der Figur 5 ist das Ausführungsbeispiel eines erfindungsgemäßen Montagemoduls 20 in einer Draufsicht dargestellt. Das Montagemodul 20 weist eine Installationsplatte 25 als ein Befestigungselement, das optisches Sensorsystem 30 und das Anzeigenelement 48 auf. Das optische Sensorsystem 30 weist das Lichtmodul 40 auf, das in Figur 5 als eine einzige Lichtquelle 41 ausgebildet ist. Die Lichtquelle 41 emittiert Infrarotlicht, wodurch ein Sendebereich 27 entsteht. Form und Gestalt des Sendebereiches 27 wird durch ein Linsensystem 42 der Lichtquelle 41, das nur schematisch dargestellt ist, erreicht. Das optische Sensorsystem 30 weist zudem den optischen Sensor 50 auf, der aus einem Empfangsbereich 26 Licht empfangen kann. Form und Gestalt des Empfangsbereiches 26 wird durch ein schematisch dargestelltes Linsensystem 51 des optischen Sensors 50 vorgegeben. Der mit dicker Strichdicke dargestellte Wahrnehmungsbereich 23 ergibt sich durch die Überlagerung des Sendebereiches 27 mit dem Detektionsbereich 26. Der optische Sensor 50 weist einen Infrarotfilter 52 auf, um Licht anderer Wellenlängen zu filtern. Ferner weist der optische Sensor einen Bildsensor 53 auf, auf dem das Bild entsteht. Die Überwachungseinheit 60 dient zur Auswertung des optischen Sensors 50. Der optische Sensor 50, das Lichtmodul 40 und die Überwachungseinheit 60 sind auf der Installationsplatte 25 befestigt. Die Linsensysteme 42, 51 sind starr.

In Figur 5 entspricht der Detektionsbereich 21 dem Wahrnehmungsbereich 23. Der Betätigungsbereich 22 kann zwei Positionen 28, 29 einnehmen, die beide innerhalb des Detektionsbereichs 21 liegen. Dieses entspricht dem Ausführungsbeispiel der Figur 1. Alternativ können Wahrnehmungsbereich 23 der Detektionsbereich 21 und der Betätigungsbereich 22 separat ausgebildet sein, so dass der Detektions- und der Betätigungsbereich 21, 22 wie in Figur 2 angeordnet sind. Das Anzeigeelement 48 weist für jede Position 28, 29 des Betätigungsbereichs 22 ein Leuchtmittel 43, 45 auf. Das Leuchtmittel 43 weist einen geringen Abstand f zum optischen Sensor 50 auf. Eine optische Achse des 57 des optischen Sensors 50 und eine optische Achse 44 des Lichtmoduls 40 sind nahe beieinander angeordnet, so dass der Sendebereich 27 möglichst weitgehend dem Empfangsbereich 26 entspricht. Die optischen Sensorsysteme 30 der Figuren 2 bis 4 unterscheidet sich von dem in Figur 5 dargestellten optischen Sensorsystem 30 durch das Fehlen der zweiten Position 29 des Betätigungsbereichs 22 und des zweiten Leuchtmittels 45.

Figur 6 zeigt eine Draufsicht auf den Bildsensor 53 des erfindungsgemäßen Montagemoduls 20 aus Figur 5, der eine Gesamtzahl an Pixel 54 aufweist. Dadurch, dass mit demselben Bildsensor 53 auch der Detektionsbereich 21 überwacht wird, werden jeweils nur wenige Pixel 54, insbesondere zwischen zwei und zehn Pixel 54 verwendet, um die Positionen 28, 29 des Betätigungsbereichs 22 auf dem Bildsensor 53 abzubilden. Beispielhaft bilden in Figur 6 jeweils vier Pixel 54 jede Position 28, 29 ab. Während der Überwachung des Betätigungsbereichs 22 in der ersten Position 28 werden nur die der ersten Position 28 zugeordneten Pixel 56 ausgewertet. Die übrigen Pixel entsprechen nicht ausgewerteten Pixeln 55. Während der Überwachung des Betätigungsbereichs 22 in der zweiten Position 29 werden nur die der zweiten Position 29 zugeordneten Pixel 58 ausgewertet. Die übrigen Pixel entsprechen nicht ausgewerteten Pixeln 55.

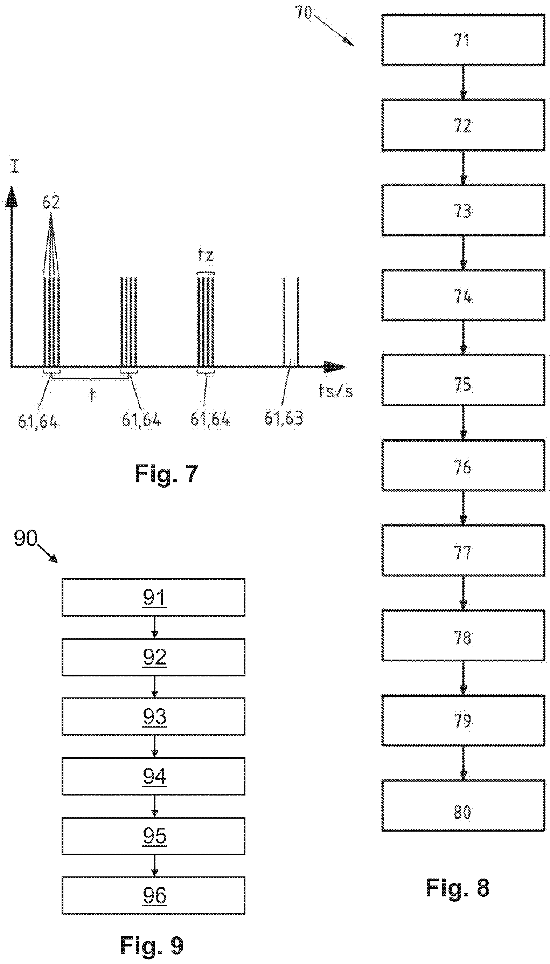

Figur 7 enthält eine Auftragung einer Lichtintensität l über der Zeit ts. Wie in Figur 7 dargestellt, wird mit Hilfe des Bildsensors 53 nach jeder Zeitspanne t ein Bild 61 aufgenommen, wobei in der Figur 7 jeweils ein Zeitintervall t_{Z} dargestellt ist, das für ein Bild 61 benötigt wird. Hierbei kann es sich um ein Erkennungsbild 64 oder ein Vergleichsbild 63 handeln. Das Erkennungsbild 64 ist mit Hilfe von Lichtpulsen 62 des Lichtmoduls 40 aufgenommen worden. Hierbei ist eine Vielzahl von Lichtpulsen 62 notwendig, um ein Erkennungsbild 64 zu erzeugen. Die Lichtpulse 62 werden mit einer vorgegebenen Pulsfrequenz von dem Lichtmodul 40 emittiert. Das von dem Bildsensor 53 empfangene Licht der Lichtpulse 62 eines Bildes 61 wird aufintegriert oder aufsummiert, um das Erkennungsbild 64 zu erzeugen. Um eine Abstandserfassung durchzuführen, gibt das optische Sensorsystem 30 das Zeitintervall tz vor, in dem die Lichtpulse 62 ein Erkennungsbild 64 erzeugen. Der Abstand des Benutzers 10, insbesondere des Körperteils 11, 12, zum optischen Sensor 50 wird in Abhängigkeit von der Intensität der Lichtpulse 62 im Zeitintervall tz bestimmt. In dem Vergleichsbild 63 wird ein Bild 61 aufgenommen, ohne dass Lichtpulse 62 des Lichtmoduls 40 den Bildsensor 53 erreichen. Hierzu emittiert das Lichtmodul 40 kein Licht.

In Figur 8 ist ein erstes erfindungsgemäßes Verfahren dargestellt. Zunächst überwacht in einem ersten Schritt 71 das optische Sensorsystem 30 den Detektionsbereich 21. Befindet sich ein Benutzer 10 im Detektionsbereich 21 und erfüllt der Benutzer 10 die vorgegebenen Kriterien, so wird der Benutzer 10 erkannt. In diesem Fall wird in einem zweiten Schritt 72 ein Signal für die Authentifizierungsüberprüfung ausgelöst. In einem dritten Schritt 73 wird die Authentifizierungsüberprüfung durchgeführt. Hierbei wird durch das im Schritt 72 ausgelöste Signal das Zugangskontrollsystem 14 veranlasst, ein Wecksignal an den ID-Geber 13 zu senden. Anschließend übermittelt der ID-Geber 13 einen Authentifizierungscode an das Zugangskontrollsystem 14. Das Zugangskontrollsystem 14 vergleicht den Authentifizierungscode mit einem gespeicherten Code. Stimmen die beiden Codes überein, so ist die Authentifizierung erfolgreich und ein Entriegelungssignal wird ausgelöst. Hierbei kann es sich um ein Entriegelungssignal für alle Türen des Kraftfahrzeuges 1 handeln oder aber auch nur ein Entriegelungssignal für die Heckklappe 2 oder die Seitentür 3.

Nach der erfolgreichen Authentifizierung wird in einem vierten Schritt 74 ein Signal, dass der Benutzer 10 authentifiziert wurde, von dem optischen Sensorsystem 30 empfangen. In einem fünften Schritt 75 wird begonnen, den Betätigungsbereich 22 in der einzigen Position 28 zu überwachen. Hierzu wird eine Zeitmessung zur Erfassung der Betätigungsdauer gestartet. Ebenfalls beginnt das Anzeigeelement 48 sichtbares Licht 46 in einem ersten Beleuchtungszustand zu emittieren, so dass dem Benutzer 10 die Endfläche 24 des Betätigungsbereichs 22 sichtbar gemacht wird. Die Helligkeit des Lichts 46 wird entsprechend des vom Helligkeitssensors 18 übermittelten Wert für die Helligkeit des Umgebungslichts eingestellt. Zugleich sendet das Lichtmodul 40 gepulstes infrarotes Licht aus, um Abstandsmessungen durchführen zu können. Der optische Sensor 50 empfängt das Licht des Lichtmoduls 40, wodurch ein Erkennungsbild 64 entsteht. Zusätzlich werden Vergleichsbilder 63 aufgenommen und ausgewertet. Die Überwachungseinheit 60 wertet die erhaltenen Bilder 61 aus. In einem sechsten Schritt 76 stellt die Überwachungseinheit fest, dass nur noch ein in der Überwachungseinheit 60 hinterlegtes Zeitintervall bis zum Ende der maximalen Betätigungsdauer erreicht ist. Die Überwachungseinheit 60 veranlasst das Anzeigeelement 48 zu blinken. In einem siebten Schritt 77 stellt die Überwachungseinheit 60 fest, dass die maximale Betätigungsdauer abgelaufen ist, ohne dass ein Benutzer 10 den Fuß 11 in den Betätigungsbereich 22 gehalten hat. Die Überwachungseinheit 60 veranlasst das Anzeigeelement 48, kein Licht mehr zu emittieren und stellt die Überwachung des Betätigungsbereichs 22 zum Zwecke des Erkennens eines Benutzerwillen ein. Die Überwachungseinheit 60 überprüft jedoch weiterhin den Wahrnehmungsbereich 23, ob eine vordefinierte Benutzerhandlung erfolgt, um den Betätigungsbereich 22 erneut Überwachen zu können. Die vordefinierte Benutzerhandlung kann z. B. ein definiertes Heraus- und wieder Hineingehen des Benutzers 10 in den Wahrnehmungsbereich 23 sein. In einem achten Schritt 78 stellt die Überwachungseinheit 60 fest, dass eine vordefinierte Benutzerhandlung erfolgt ist, und beginnt erneut den Betätigungsbereich 22 zu überwachen, um den Benutzerwillen zum Bereitstellen des Arbeitssignals zu erkennen. In einem neunten Verfahrensschritt erkennt die Überwachungseinheit 60 den Benutzerwilien, z. B. indem die Überwachungseinheit 60 einen Fuß 11 des Benutzers, der eine Mindestabstandsbedingung erfüllt, detektiert, und beendet die Überwachung und das Anzeigen des Betätigungsbereichs 22. In einem zehnten Verfahrensschritt 80 stellt die Überwachungseinheit 60 ein Arbeitssignal bereit.

Fig. 9 enthält ein zweites Ausführungsbeispiel für ein erfindungsgemäßes Verfahren 90. Nach der erfolgreichen Authentifizierung wird in einem ersten Schritt 91 ein Signal, dass der Benutzer 10 authentifiziert wurde, von dem optischen Sensorsystem 30 empfangen. In einem zweiten Schritt 72 wird begonnen, den Betätigungsbereich 22 in einer ersten Position 28 zu überwachen. Während der Überwachung stellt die Überwachungseinheit 60 in einem dritten Schritt 73 fest, dass der Benutzer 10 nicht die Gestik im Betätigungsbereich 22 in der ersten Position 28 durchgeführt hat, durch die der Benutzer 10 seinen Benutzerwillen zum Bereitstellen des Arbeitssignals kundtut, sondern eine andere Gestik durchführt, die einer vordefinierten Benutzerhandlung zum Ändern der Position 28, 29 des Betätigungsbereichs 22 entspricht. Hierauf ändert in einem vierten Verfahrensschritt 94 die Überwachungseinheit die Position 28, 29 des Betätigungsbereichs und beginnt mit der Überwachung des Betätigungsbereichs 22 in der zweiten Position 29. Zugleich wird das erste Leuchtmittel 43 veranlasst, kein Licht 46 zu emittieren, und zweite Leuchtmittel 45 veranlasst, Licht 46 zu emittieren. In einem fünften Verfahrensschritt 95 erkennt die Überwachungseinheit 60 den Benutzerwillen in dem Betätigungsbereich 22 in der zweiten Position 29 und beendet die Überwachung. In einem sechsten Verfahrensschritt 96 stellt die Überwachungseinheit 60 ein Arbeitssignal bereit.

In einem nicht dargestellten Verfahren wird zunächst in einem Eingabemenü eine veränderte maximale Betätigungsdauer eingestellt. Nach einer erfolgreichen Authentifizierung beginnt die Überwachungseinheit 60 den Betätigungsbereich 22 für die geänderte maximale Betätigungsdauer zu überwachen. Erkennt die Überwachungseinheit 60 den Benutzerwillen in dem Betätigungsbereich 22 während der geänderten maximalen Betätigungsdauer, wird die Überwachung beendet. In einem anschließenden Verfahrensschritt stellt die Überwachungseinheit 60 ein Arbeitssignal bereit.

### Bezugszeichenliste

- 1: Kraftfahrzeug
- 2: Heckklappe (bewegliches Teil)
- 3: Seitentür (bewegliches Teil)
- 4: B-Säule
- 5: Türgriff
- 8: Türschloss
- 9: Rückleuchte

- 10: Benutzer
- 11: Fuß
- 12: Hand
- 13: ID-Geber
- 14: Zugangskontrollsystem
- 15: Bodenfläche
- 16: Authentifizierungssystem
- 17: kapazitiver Sensor
- 18: Helligkeitssensor
- 19: Rollstuhl, Rollator

- 20: Montagemodul
- 21: Detektionsbereich
- 22: Betätigungsbereich
- 23: Wahrnehmungsbereich
- 24: Endfläche
- 25: Befestigungselement
- 26: Empfangsbereich
- 27: Sendebereich von 40
- 28: erste Position von 22
- 29: zweite Position von 22
- 30: Optisches Sensorsystem
- 31: Leuchtelemente
- 32: Markierung
- 33: Lichter von 9

- 40: Lichtmodul
- 41: Lichtquelle
- 42: Linsensystem
- 43: erstes Leuchtmittel von 48
- 44: optische Achse von 41
- 45: zweites Leuchtmittel von 48
- 46: Licht von 48
- 47: reflektierter Lichtstrahl
- 48: Anzeigeelement

- 50: optischer Sensor
- 51: Linsensystem von 50
- 52: IR-Filter
- 53: Bildsensor
- 54: Pixel
- 55: nicht ausgewertete Pixel
- 56: ausgewertete Pixel für 28
- 57: optische Achse von 50
- 58: ausgewertete Pixel für 29

- 60: Überwachungseinheit
- 61: Bild
- 62: Lichtpuls
- 63: Vergleichsbild
- 64: Erkennungsbild

- 70: Verfahren
- 71: Verfahrensschritt
- 72: Verfahrensschritt
- 73: Verfahrensschritt
- 74: Verfahrensschritt
- 75: Verfahrensschritt
- 76: Verfahrensschritt
- 77: Verfahrensschritt
- 78: Verfahrensschritt
- 79: Verfahrensschritt
- 80: Verfahrensschritt

- 90: Verfahren
- 91: Verfahrensschritt
- 92: Verfahrensschritt
- 93: Verfahrensschritt
- 94: Verfahrensschritt
- 95: Verfahrensschritt
- 96: Verfahrensschritt

- L: Länge von 21
- a: Abstand von 11 zu 50
- b: Abstand von 15 zu 50
- f: Abstand von 43 zu 50

## Patentansprüche

1. Montagemodul (20) für ein Kraftfahrzeug (1), mit
einem optischen Sensorsystem (30), das ausgebildet ist,
a) einen außerhalb des Kraftfahrzeuges (1) liegenden Betätigungsbereich (22) während einer Betätigungsdauer zu überwachen, um einen Benutzerwillen im Betätigungsbereich (22) zu erkennen,
b) im Falle des Erkennens eines Benutzerwillens ein Arbeitssignal bereitzustellen,
wobei ein Hilfsmittel (31, 43, 45, 60) vorgesehen ist, das dem Benutzer (10) hilft, den Benutzerwillen im Betätigungsbereich (22, 28) kund zu tun, so dass das Arbeitssignal bereitgestellt wird, wobei das optische Sensorsystem (30) den optischen Sensor (50) aufweist, um Licht aus dem Betätigungsbereich (22) zu empfangen, und das optische Sensorsystem (30) ein Lichtmodul (40) mit mindestens einer Lichtquelle (41) zum Emittieren von Licht aufweist, **dadurch gekennzeichnet, dass** die Lichtquelle (41) dazu ausgebildet ist, Licht im nicht sichtbaren Bereich zu emittieren, wobei der optische Sensor (50) einen Bildsensor (53) mit Pixeln (54) aufweist, wobei der während der Überwachung des Betätigungsbereich (22) nur der Teil der Pixel (56, 58) ausgewertet wird, die den Betätigungsbereich (22) abbilden, wobei insbesondere je nach Position (28, 29) des Betätigungsbereichs (22) verschiedene Pixel (56, 58) ausgewertet werden.

2. Montagemodul (20) nach Anspruch 1,
**dadurch gekennzeichnet,**
**dass** das Montagemodul (20) ein Anzeigeelement (48) aufweist, durch das sichtbares Licht (46) emittierbar ist, um zumindest einen Teil des Betätigungsbereichs (22) und/oder die Betätigungsdauer für den Benutzer (10) sichtbar zu machen, wobei das sichtbare Licht (46) durch das Anzeigeelement (48) veränderlich emittierbar ist.

3. Montagemodul (20) nach Anspruch 1 oder 2,
**dadurch gekennzeichnet,**
**dass** das Anzeigeelement (48) in mehrere Beleuchtungszustände bringbar ist, wobei insbesondere ein Beleuchtungszustand als Hinweissignal auf das Ende der Betätigungsdauer dient.

4. Montagemodul (20) nach einem der vorhergehenden Ansprüche,
**dadurch gekennzeichnet,**
**dass** eine Position (28, 29) und/oder eine Größe des Betätigungsbereichs (22) und/oder die maximale Betätigungsdauer, insbesondere durch eine vordefinierte Benutzerhandlung, veränderbar ist.

5. Montagemodul (20) nach einem der vorhergehenden Ansprüche,
**dadurch gekennzeichnet,**
**dass** das Montagemodul (20) ausgebildet ist, den Betätigungsbereich (22) erneut zu überwachen, um einen Benutzerwillen zum Auslösen eines Arbeitssignals zu erkennen, wenn eine vorangegangene maximale Betätigungsdauer ohne ein Erkennen eines Benutzerwillens verstrichen ist.

6. Montagemodul (20) nach Anspruch 5,
**dadurch gekennzeichnet,**
**dass** das erneute Überwachen durch eine vordefinierte Benutzerhandlung einleitbar ist.

7. Montagemodul (20) nach einem der vorhergehenden Ansprüche,
**dadurch gekennzeichnet,**
**dass** die vordefinierte Benutzerhandlung eine Eingabe in ein Benutzermenü, ein Auslösen eines kapazitiven Sensors (17) und/oder eine durch das optische Sensorsystem (30) erkennbare vordefinierte Benutzerhandlung, insbesondere eine vorgegeben Gestik innerhalb eines Wahrnehmungsbereichs (23) des optischen Sensorsystems (30) und/oder eine Bewegung in den und/oder aus dem Wahrnehmungsbereich (23) des optischen Sensorsystems (30), ist.

8. Montagemodul (20) nach einem der vorhergehenden Ansprüche,
**dadurch gekennzeichnet,**
**dass** das Montagemodul (20) in einen Lernmodus überführbar ist, in dem das Montagemodul (20) die zu ändernde Position (28, 29) und/oder Größe des Betätigungsbereichs (22) und/oder die zu ändernde Länge der maximalen Betätigungsdauer lernt.

9. Montagemodul (20) nach einem der vorhergehenden Ansprüche,
**dadurch gekennzeichnet,**
**dass** verschiedene Positionen (28, 29) des Betätigungsbereichs (22) in dem
optischen Sensorsystem (30) fest vorgegeben sind, wobei insbesondere die Reihenfolge, in der der Betätigungsbereich (22) die Position (28, 29) wechselt, fest vorgegeben ist.

10. Montagemodul (20) nach einem der vorhergehenden Ansprüche,
**dadurch gekennzeichnet,**
**dass** das Anzeigeelement (48) mehrere Leuchtmittel (43, 45) aufweist, wobei jeweils ein oder mehrere Leuchtmittel (43, 45) den verschiedenen Positionen (28, 29) des Betätigungsbereichs (22) fest zugeordnet sind.

11. Montagemodul (20) nach einem der vorhergehenden Ansprüche,
**dadurch gekennzeichnet, dass** das Montagemodul (20) geeignet ist, die Position des Benutzers (10) und die Richtung, in die der Benutzer (10) sich zum Betätigungsbereich (22) zu bewegen hat, zu ermitteln und ein wahrnehmbares, insbesondere sichtbares, hörbares oder fühlbares Signal, für den Benutzer (10) auszulösen, um den Benutzer (10) zum Betätigungsbereich (22) zu führen.

12. Montagemodul (20) nach einem der vorhergehenden Ansprüche,
**dadurch gekennzeichnet,**
**dass** Montagemodul (20) Mittel (31) aufweist, durch die das wahrnehmbare, insbesondere sichtbare, hörbare oder fühlbare Signal, für den Benutzer (10) erzeugbar ist, um den Benutzer (10) zum Betätigungsbereich zu führen, wobei das Montagemodul (20) insbesondere Leuchtelemente (31) und/oder einen Lautsprecher aufweist.

13. Montagemodul (20) nach einem der vorhergehenden Ansprüche,
**dadurch gekennzeichnet,**
**dass** das optische Sensorsystem (30) eine Überwachungseinheit (60) aufweist, die dazu ausgebildet ist, Bilder (61) auszuwerten, die vom optischen Sensor (50) aufgenommen worden sind.

14. Montagemodul (20) nach einem der vorhergehenden Ansprüche,
**dadurch gekennzeichnet,**
**dass** das Anzeigeelement (48) dazu ausgebildet ist, eine Endfläche (24) des Betätigungsbereichs (22) auf einer Bodenfläche (15), auf der das Kraftfahrzeug (1) steht, sichtbar zu machen.

15. Montagemodul (20) nach einem der vorhergehenden Ansprüche,
**dadurch gekennzeichnet,**
**dass** das optische Sensorsystem (30) dazu ausgebildet ist, vor Schritt a) ein Signal, dass ein berechtigter Benutzer (10) authentifiziert ist, zu erhalten, und daraufhin die Überwachung des Betätigungsbereichs (22) zu veranlassen.

16. Montagemodul (20) nach einem der vorhergehenden Ansprüche,
**dadurch gekennzeichnet,**
**dass** das optische Sensorsystem (30) geeignet ist,
vor der Authentifizierung einen außerhalb des Kraftfahrzeugs (1) liegenden Detektionsbereich (21) zu überwachen und im Falle eines Erkennens des Benutzers (10) im Detektionsbereich (21) ein Signal für den Start einer Authentifizierungsüberprüfung zwischen einem ID-Geber (13) und einem Zugangskontrollsystem (14) des Kraftfahrzeuges (1) auszulösen.

17. Montagemodul (20) nach einem der vorhergehenden Ansprüche,
**dadurch gekennzeichnet,**
**dass** der optische Sensor (50) und/oder das Lichtmodul (40) dazu ausgebildet sind, sowohl zur Überwachung des Detektionsbereichs (21) als auch zum Überwachen des Betätigungsbereichs (22) eingesetzt zu werden, wobei insbesondere der Detektionsbereich (21) und der Betätigungsbereich (22) im Wahrnehmungsbereich (23) des optischen Sensorsystems (30) liegen.

18. Montagemodul (20) nach einem der vorhergehenden Ansprüche,
**dadurch gekennzeichnet,**
**dass** der Betätigungsbereich (22) innerhalb des Detektionsbereichs (21) liegt, wobei insbesondere jede Position (28, 29), die für den Betätigungsbereich (22) einnehmbar ist, innerhalb des Detektionsbereichs (21) liegt.

19. Montagemodul (20) nach einem der vorhergehenden Ansprüche,
**dadurch gekennzeichnet,**
**dass** die Intensität des von dem Anzeigeelement (48) emittierten Lichts (46) von der Helligkeit des Umgebungslichts abhängig ist, wobei insbesondere die Helligkeit des Umgebungslichts durch einen Helligkeitssensor (18) ermittelbar ist.

20. Authentifizierungssystem (16) mit einem Zugangskontrollsystem (14), einem ID-Geber (13) und einem Montagemodul (20) nach einem der vorhergehenden Ansprüche.

21. Kraftfahrzeug (1) mit einem Montagemodul (20) nach einem der Ansprüche 1 - 19.

22. Kraftfahrzeug (1) mit einem Authentifizierungssystem (16) nach Anspruch 20.

23. Kraftfahrzeug (1) nach Anspruch 21 oder 22 ,
**dadurch gekennzeichnet,**
**dass** das Kraftfahrzeug (1) ein Mittel (9, 33) aufweist, durch die ein wahrnehmbares, insbesondere sichtbares, hörbares oder fühlbares, Signal für den Benutzer (10) erzeugbar ist,
um den Benutzer (10) zum Betätigungsbereich (22) zu führen, wobei insbesondere das Kraftfahrzeug (1) nebeneinander angeordnete Lichter (33), insbesondere Lichter (33) einer Rückleuchte (9), Lichter einer Bremsleuchte, Lichter von Blinkern, oder einen Lautsprecher für das Signal zur Verfügung stellt.

24. Verfahren (70, 90) zur Bereitstellung eines Arbeitssignals für ein Kraftfahrzeug (1) mit folgenden Schritten:
a) Überwachung eines außerhalb des Kraftfahrzeuges (1) liegenden Betätigungsbereichs (22) während einer Betätigungsdauer um einen Benutzerwillen im Betätigungsbereich (22) zu erkennen,
b) Bereitstellen des Arbeitssignals im Falle des Erkennens eines Benutzerwillens,
wobei ein Hilfsmittel zur Verfügung gestellt wird, das dem Benutzer (10) hilft, den Benutzerwillen im Betätigungsbereich (22) kund zu tun, so dass das Arbeitssignal ausgelöst wird, wobei das optische Sensorsystem (30) den optischen Sensor (50) aufweist, um Licht aus dem Betätigungsbereich (22) zu empfangen, und das optische Sensorsystem (30) ein Lichtmodul (40) mit mindestens einer Lichtquelle (41) zum Emittieren von Licht aufweist, **dadurch gekennzeichnet, dass** die Lichtquelle (41) dazu ausgebildet ist, Licht im nicht sichtbaren Bereich zu emittieren, wobei der optische Sensor (50) einen Bildsensor (53) mit Pixeln (54) aufweist, wobei der während der Überwachung des Betätigungsbereich (22) nur der Teil der Pixel (56, 58) ausgewertet wird, die den Betätigungsbereich (22) abbilden, wobei insbesondere je nach Position (28, 29) des Betätigungsbereichs (22) verschiedene Pixel (56, 58) ausgewertet werden, wobei das Verfahren mit dem Montagemodul (20) nach einem der Ansprüche 1 bis 21 durchgeführt wird.

25. Verfahren (70, 90) nach Anspruch 24, **dadurch gekennzeichnet, dass** es mit dem Authentifizierungssystem (16) nach Anspruch 20 oder mit dem Kraftfahrzeug (1) nach einem der Ansprüche 21 bis 23 durchgeführt wird.

## Claims

1. An installation module (20) for a motor vehicle (1) with
an optical sensor system (30) which is designed
a) for monitoring an actuation region (22) lying outside the motor vehicle (1) for an actuation period in order to determine an intention of a user in the actuation region (22),
b) for providing a work signal if a user intention is detected,
wherein an aid (31, 43, 45, 60) is provided that helps the user (10) to make his intention known in the actuation region (22, 28), so that the work signal is provided,
wherein
the optical sensor system (30) includes the optical sensor (50) in order to receive light from the actuation region (22), and the optical sensor system (30) includes a light module (40) having at least one light source (41) for emitting light,
**characterized in that**
the light source (41) is designed to emit light in the non-visible range, wherein the optical sensor (50) has an image sensor (53) with pixels (54), wherein only the portion of pixels (56, 58) that map the actuation region (22) is evaluated while the actuation region (22) is being monitored, wherein in particular different pixels (56, 58) are evaluated depending on the position (28, 29) of the actuation region (22).

2. The installation module (20) according to claim 1, **characterized in that**
the installation module (20) has a display element (48) via which visible light (46) can be emitted in order to render at least a part of the actuation region (22) and/or the actuation period visible to the user (10), wherein the emission of the visible light (46) can be varied by the display element (48).

3. The installation module (20) according to claim 1 or 2,
**characterized in that**
the display element (48) can be brought into multiple illumination states, wherein one illumination state particularly serves as a signal warning of the end of the actuation period.

4. The installation module (20) according to any one of the preceding claims,
**characterized in that**
a position (28, 29) and/or a magnitude of the actuation region (22) and/or the maximum actuation period can be changed in particular by a predefined user action.

5. The installation module (20) according to any one of the preceding claims,
**characterized in that**
the installation module (20) is designed to resume monitoring the actuation region (22) in order to detect a user intention to trigger a work signal when a preceding maximum actuation period has elapsed without detection of a user intention.

6. The installation module (20) according to claim 5,
**characterized in that**
the resumption of monitoring can be initiated by a predefined user action.

7. The installation module (20) according to any one of the preceding claims,
**characterized in that**
the predefined user action is an entry in a user menu, a triggering of a capacitive sensor (17) and/or a predefined user action that is detectable by the optical sensor system (30) particularly a specified gesture within a perception region (23) of the optical sensor system (30) and/or a movement into and/or out of the perception region (23) of the optical sensor system (30).

8. The installation module (20) according to any one of the preceding claims,
**characterized in that**
the installation module (20) can be switched into a learning mode, in which the installation module (20) learns the position (28, 29) that is to be changed and/or the size of the actuation region (22) and/or the length of the maximum actuation period that is to be changed.

9. The installation module (20) according to any one of the preceding claims,
**characterized in that**
various positions (28, 29) of the actuation region (22) are preset permanently in the optical sensor system (30), wherein in particular the order in which the actuation region (22) changes the position (28, 29) is preset permanently.

10. The installation module (20) according to any one of the preceding claims,
**characterized in that**
the display element (48) has a plurality of lighting means (43, 45), wherein one of more lighting means (43, 45) is/are assigned in fixed manner to each of the various positions (28, 29) of the actuation region (22).

11. The installation module (20) according to any one of the preceding claims,
**characterized in that**
the installation module (20) is able to determine the position of the user (10) and the direction in which the user (10) must move to reach the actuation region (22), and to trigger a signal that is perceptible, particularly visible, audible or palpable for the user (10) to guide the user (10) to the actuation region (22).

12. The installation module (20) according to any one of the preceding claims,
**characterized in that**
the installation module (20) has means (31) by which the perceptible, particularly visible, audible or palpable signal can be generated for the user (10) to guide the user (10) to the actuation region, wherein the installation module (20) in particular includes luminous elements (31) and/or a loudspeaker.

13. The installation module (20) according to any one of the preceding claims,
**characterized in that**
the optical sensor system (30) includes a monitoring unit (60) which is designed to evaluate images (61) that are captured by the optical sensor (50) .

14. The installation module (20) according to any one of the preceding claims,
**characterized in that**
the display element (48) is designed to render an end area (24) of the actuation region (22) visible on a ground surface (15) on which the motor vehicle (1) is standing.

15. The installation module (20) according to any one of the preceding claims,
**characterized in that**
the optical sensor system (30) is designed to receive a signal indicating that an authorised user (10) has been authenticated before step a), and in response to initiate monitoring of the actuation region (22).

16. The installation module (20) according to any one of the preceding claims,
**characterized in that**
the optical sensor system (30) is able to
monitor a detection region (21) lying outside the motor vehicle (1) and if the user (10) is detected in the detection region (21) to trigger a signal to start an authentication check between an ID transponder (13) and an access control system (14) of the motor vehicle (1).

17. The installation module (20) according to any one of the preceding claims,
**characterized in that**
the optical sensor (50) and/or the light module (40) is/are designed to be used both to monitor the detection region (21) and to monitor the actuation region (22), wherein in particular the detection region (21) and the actuation region (22) lie within the perception region (23) of the optical sensor system (30).

18. The installation module (20) according to any one of the preceding claims,
**characterized in that**
the actuation region (22) lies within the detection region (21), wherein in particular each position (28, 29) which can be assumed for the actuation region (22) lies within the detection region (21).

19. The installation module (20) according to any one of the preceding claims,
**characterized in that**
the intensity of the light (46) that is emitted by the display element (48) is dependent on the brightness of the ambient light, wherein in particular the brightness of the ambient light can be determined by a brightness sensor (18).

20. An authentication system (16) with an access control system (14), an ID transponder (13) and an installation module (20) according to any one of the preceding claims.

21. A motor vehicle (1) having an installation module (20) according to any one of claims 1 - 19.

22. A motor vehicle (1) having an authentication system (16) according to claim 20.

23. The motor vehicle (1) according to claim 21 or 21, **characterized in that**
the motor vehicle (1) has a means (9, 33) by which a signal can be generated which is perceptible, particularly a visible, audible or palpable for the user (10), to guide the user (10) to the actuation region (22), wherein in particular the motor vehicle (1) provides lights arranged side by side (33), particularly lights (33) of a tail light (9), lights of a brake light, lights of direction indicators or a loudspeaker therefor.

24. A method (70, 90) for providing a work signal for a motor vehicle (1) having the following steps:
a) monitoring an actuation region (22) lying outside the motor vehicle (1) for an actuation period in order to detect an intention of a user in the actuation region (22),
b) providing the work signal if a user intention is detected,
wherein an aid is provided that helps the user (10) to make his intention known in the actuation region (22), so that the work signal is triggered, wherein
the optical sensor system (30) includes the optical sensor (50) in order to receive light from the actuation region (22), and the optical sensor system (30) includes a light module (40) having at least one light source (41) for emitting light,
**characterized in that**
the light source (41) is designed to emit light in the non-visible range, wherein the optical sensor (50) has an image sensor (53) with pixels (54), wherein only the portion of pixels (56, 58) that map the actuation region (22) is evaluated while the actuation region (22) is being monitored, wherein in particular different pixels (56, 58) are evaluated depending on the position (28, 29) of the actuation region (22), wherein the method is carried out with the installation module (20) according any one of claims 1 to 21.

25. The method (70, 90) according to claim 24,
**characterized in that**
it is carried out with the authentication system (16) according to claim 20 or with the motor vehicle (1) according to any one of claims 21 to 23.

## Revendications

1. Module de montage (20) pour un véhicule automobile (1), avec
un système de détection optique (30), qui est constitué
a) pour surveiller une zone d'actionnement (22) située en dehors du véhicule automobile (1) pendant une durée d'actionnement, pour identifier une volonté d'utilisateur dans la zone d'actionnement (22),
b) pour fournir un signal de travail en cas d'identification d'une volonté d'utilisateur,
un moyen auxiliaire (31, 43, 45, 60) étant prévu qui aide l'utilisateur (10) à signaler la volonté d'utilisateur dans la zone d'actionnement (22, 28) de telle manière que le signal de travail est fourni,
le système de détection optique (30) comportant le capteur optique (50) pour recevoir de la lumière de la zone d'actionnement (22) et le système de détection optique (30) comportant un module lumineux (40) avec au moins une source de lumière (41) pour émettre de la lumière,
**caractérisé en ce que**
la source de lumière (41) est constituée pour émettre de la lumière dans une zone non visible, le capteur optique (50) comportant un capteur d'image (53) avec pixels (54), seule étant exploitée pendant la surveillance de la zone d'actionnement (22) la partie des pixels (56, 58) qui reproduisent la zone d'actionnement (22), différents pixels (56, 58) étant notamment exploités selon la position (28, 29) de la zone d'actionnement (22).

2. Module de montage (20) selon la revendication 1,
**caractérisé en ce que**
le module de montage (20) comporte un élément d'affichage (48), à travers lequel une lumière visible (46) peut être émise pour rendre visible au moins une partie de la zone d'actionnement (22) et/ou la durée d'actionnement pour l'utilisateur (10), la lumière visible (46) pouvant être émise de façon variable par l'élément d'affichage (48).

3. Module de montage (20) selon la revendication 1 ou 2,
**caractérisé en ce que**
l'élément d'affichage (48) peut être mis dans plusieurs états d'éclairage, en particulier un état d'éclairage servant de signal d'avertissement à la fin de la durée d'actionnement.

4. Module de montage (20) selon l'une quelconque des revendications précédentes,
**caractérisé en ce**
**qu'**une position (28, 29) et/ou une valeur de la zone d'actionnement (22) et/ou la durée d'actionnement maximale peut être modifiée notamment par une manipulation d'utilisateur prédéfinie.

5. Module de montage (20) selon l'une quelconque des revendications précédentes,
**caractérisé en ce que**
le module de montage (20) est constitué pour surveiller à nouveau la zone d'actionnement (22) pour identifier une volonté d'utilisateur pour déclencher un signal de travail, si une durée d'actionnement maximale préalable est écoulée sans une identification d'une volonté d'utilisateur.

6. Module de montage (20) selon la revendication 5,
**caractérisé en ce que**
la nouvelle surveillance peut être introduite par une manipulation d'utilisateur prédéfinie.

7. Module de montage (20) selon l'une quelconque des revendications précédentes,
**caractérisé en ce que**
la manipulation d'utilisateur prédéfinie est une introduction dans un menu d'utilisateur, un déclenchement d'un capteur capacitif (17) et/ou une manipulation d'utilisateur prédéfinie identifiable par le système de détection optique (30), notamment une gestuelle prédéfinie à l'intérieur d'une zone de perception (23) du système de détection optique (30) et/ou un mouvement dans et/ou de la zone de perception (23) du système de détection optique (30).

8. Module de montage (20) selon l'une quelconque des revendications précédentes,
**caractérisé en ce que**
le module de montage (20) peut être transféré en un mode d'apprentissage dans lequel le module de montage (20) apprend la position à modifier (28, 29) et/ou la taille de la zone d'actionnement (22) et/ou la longueur à modifier de la durée d'actionnement maximale.

9. Module de montage (20) selon l'une quelconque des revendications précédentes,
**caractérisé en ce que**
différentes positions (28, 29) de la zone d'actionnement (22) sont fermement prédéfinies dans le système de détection optique (30), notamment la succession dans laquelle la zone d'actionnement (22) change, la position (28, 29) étant fermement prédéfinie.

10. Module de montage (20) selon l'une quelconque des revendications précédentes,
**caractérisé en ce que**
l'élément d'affichage (48) comporte plusieurs moyens luminescents (43, 45), un ou plusieurs moyens luminescents (43, 45) étant fermement attribués respectivement aux différentes positions (28, 29) de la zone d'actionnement (22).

11. Module de montage (20) selon l'une quelconque des revendications précédentes,
**caractérisé en ce que**
le module de montage (20) est adapté pour déterminer la position de l'utilisateur (10) et la direction dans laquelle l'utilisateur (10) doit se déplacer vers la zone d'actionnement (22) et déclencher un signal perceptible, notamment visible, audible ou sensible pour l'utilisateur (10) pour guider l'utilisateur (10) vers la zone d'actionnement (22).

12. Module de montage (20) selon l'une quelconque des revendications précédentes,
**caractérisé en ce que**
le module de montage (20) comporte des (31) par lesquels le signal perceptible, notamment visible, audible ou sensible pour l'utilisateur (10) peut être produit pour guider l'utilisateur (10) vers la zone d'actionnement, le module de montage (20) comportant notamment des éléments luminescents (31) et/ou un haut-parleur.

13. Module de montage (20) selon l'une quelconque des revendications précédentes,
**caractérisé en ce que**
le système de détection optique (30) comporte une unité de surveillance (60) qui est constituée pour exploiter des images (61) qui ont été enregistrées par le capteur optique (50).

14. Module de montage (20) selon l'une quelconque des revendications précédentes,
**caractérisé en ce que**
l'élément d'affichage (48) est constitué pour rendre visible une surface d'extrémité (24) de la zone d'actionnement (22) sur une surface du sol (15) sur laquelle se trouve le véhicule automobile (1) .

15. Module de montage (20) selon l'une quelconque des revendications précédentes,
**caractérisé en ce que**
le système de détection optique (30) est constitué pour recevoir avant l'étape a) un signal qu'un utilisateur (10) est authentifié et engager d'après cela la surveillance de la zone d'actionnement (22).

16. Module de montage (20) selon l'une quelconque des revendications précédentes,
**caractérisé en ce que**
le système de détection optique (30) est adapté pour surveiller
avant authentification une zone de détection (21) se situant en dehors du véhicule automobile (1) et en cas d'une identification de l'utilisateur (10) dans la zone de détection (21) pour déclencher un signal pour le démarrage d'un contrôle d'authentification entre un indicateur d'identifiant (ID) (13) et un système de contrôle d'accès (14) du véhicule automobile (1).

17. Module de montage (20) selon l'une quelconque des revendications précédentes,
**caractérisé en ce que**
le capteur optique (50) et/ou le module lumineux (40) sont constitués tant pour être utilisés pour la surveillance de la zone de détection (21) que pour la surveillance de la zone d'actionnement (22), la zone de détection (21) et la zone d'actionnement (22) se situant dans la zone de perception (23) du système de détection optique (30) .

18. Module de montage (20) selon l'une quelconque des revendications précédentes,
**caractérisé en ce que**
la zone d'actionnement (22) se situe à l'intérieur de la zone de détection (21), chaque position (28, 29), qui peut être prise pour la zone d'actionnement (22), se situant à l'intérieur de la zone de détection (21).

19. Module de montage (20) selon l'une quelconque des revendications précédentes,
**caractérisé en ce que**
l'intensité de la lumière (46) émise par l'élément d'affichage (48) dépend de la luminosité de la lumière ambiante, la luminosité de la lumière ambiante pouvant être déterminée notamment par un capteur de luminosité (18).

20. Système d'authentification (16) avec un système de contrôle d'accès (14), un indicateur d'identifiant (ID) (13) et un module de montage (20) selon l'une quelconque des revendications précédentes.

21. Véhicule automobile (1) avec un module de montage (20) selon l'une quelconque des revendications 1 - 19.

22. Véhicule automobile (1) avec un système d'authentification (16) selon la revendication 20.

23. Véhicule automobile (1) selon la revendication 21 ou 22,
**caractérisé en ce que**
le véhicule automobile (1) comporte, un moyen (9, 33) par lequel peut être produit un signal perceptible, notamment visible, audible ou sensible pour l'utilisateur (10), pour guider l'utilisateur (10) vers la zone d'actionnement (22), le véhicule automobile (1) mettant à disposition en particulier des lumières disposées les unes à côté des autres (33), notamment des lumières (33) d'un feu arrière (9), des lumières d'un feu de stop, des lumières de clignotants ou un haut-parleur pour le signal.

24. Procédé (70, 90) pour la fourniture d'un signal de travail pour un véhicule automobile (1) avec les étapes suivantes :
a) surveillance d'une zone d'actionnement (22) située en dehors du véhicule automobile (1) pendant une durée d'actionnement pour identifier une volonté d'utilisateur dans la zone d'actionnement (22),
b) fourniture d'un signal de travail en cas d'identification d'une volonté d'utilisateur,
un moyen auxiliaire étant mis à disposition, qui aide l'utilisateur (10) à signaler la volonté d'utilisateur dans la zone d'actionnement (22) de telle manière que le signal de travail est déclenché,
le système de détection optique (30) comportant le capteur optique (50) pour recevoir de la lumière de la zone d'actionnement (22) et le système de détection optique (30) comportant un module lumineux (40) avec au moins une source de lumière (41) pour émettre de la lumière, **caractérisé en ce que** la source de lumière (41) est constituée pour émettre de la lumière dans la zone non visible, le capteur optique (50) comportant un capteur d'images (53) avec des pixels (54) seule étant exploitée pendant la surveillance de la zone d'actionnement (22) la partie des pixels (56, 58) qui reproduisent la zone d'actionnement (22), notamment différents pixels (56, 58) étant exploités selon la position (28, 29) de la zone d'actionnement (22), le procédé étant effectué avec le module de montage (20) selon l'une quelconque des revendications 1 à 21.

25. Procédé (70, 90) selon la revendication 24,
**caractérisé en ce**
**qu'**il est effectué avec le système d'authentification (16) selon la revendication 20 ou avec le véhicule automobile (1) selon l'une quelconque des revendications 21 à 23.
